# EUROPÄISCHE PATENTSCHRIFT

(11) **EP 0 451 111 B1**
(45) Veröffentlichungstag und Bekanntmachung des Hinweises auf die Patenterteilung: **18.08.1993**
(21) Anmeldenummer: 91810250.0
(22) Anmeldetag: 05.04.1991
(51) Int. Cl.: B27B 5/06, B23D 47/04

(54) **Rationeller Plattenzuschnitt an vertikalen Plattensägen**
Rational cutting of plates on vertical plate saws
Dispositif pour couper des panneaux de manière rationnelle dans une machine verticale à scier des panneaux

(30) Priorität: 06.04.1990 CH 1176/90
(43) Veröffentlichungstag der Anmeldung: 09.10.1991
(73) Patentinhaber: Striebig AG, CH-6014 Littau (CH)
(72) Erfinder: Striebig, Ludwig, CH-6005 Luzern (CH)
(74) Vertreter: Eschmann, Heinz

(56) Entgegenhaltungen:
- EP-A- 0 004 926
- DE-B- 1 153 877
- DE-U- 6 606 703
- US-A- 3 945 285

## Beschreibung

Die Erfindung betrifft einerseits eine vertikale Plattensäge gemäss dem Oberbegriff des unabhängigen Patentanspruchs 1 und andererseits ein Verfahren zum rationellen Aufteilen einer Platte auf einer solchen vertikalen Plattensäge.

Das Aufteilen grosser Werkstoffplatten ist bekanntlich nicht nur mit einem beträchtlichen Kraftaufwand verbunden, sondern erfordert auch viel Zeit, da die nach dem Abtrennen eines Längsstreifens verbleibende Restplatte zunächst entfernt werden muss, bevor der durch Horizontalschnitt abgetrennte Längsstreifen auf die Stützrollen der Plattensäge aufgesetzt und nun durch Vertikalschnitt unterteilt werden kann.

Es ist bereits vorgeschlagen worden, die aufzuteilende Platte, von unten beginnend, in Längsstreifen aufzuteilen und diese weiter durch Vertikalschnitte zu unterteilen, solange der obere Plattenrest an seinem oberen waagrechten Randbereich durch eine Haltevorrichtung gehalten wird. Dieses bekannte Verfahren hat sich aber bei seiner praktischen Anwendung insofern als unzweckmässig erwiesen, als die an der Plattensäge zur Durchführung des Verfahrens erforderlichen Massnahmen einen aussergewöhnlichen Aufwand bedingen, der sich insbesondere durch die Ausbildung der Spannpratzen (Hydraulik), die Einhaltung der Sicherheitsvorschriften und die Schwierigkeit bei der Ausbildung eines höhenverstellbaren Plattenrostes ergibt.

Es ist somit die Aufgabe der vorliegenden Erfindung, eine Plattensäge der eingangs definierten Art sowie ein Verfahren zum rationellen Aufteilen von Platten vorzuschlagen, die es gestatten, die jeweils vorgeschriebene Aufteilung der Platten durch aufeinanderfolgende Horizontal- und Vertikalschnitte vorzunehmen, ohne dass eine manuelle Umsetzung der halbfertigen Plattenteile erforderlich wird, wobei die hierzu notwendige Einrichtung ohne nennenswerten Aufwand an jeder bestehenden vertikalen Plattensäge ohne nennenswerte Schwächung des Stützrahmens und ohne Behinderung der Staubabsaugung anbaubar sein soll.

Diese Aufgabe wird gelöst durch die in den beiden Patentansprüchen 1 und 4 gekennzeichnete Erfindung.

Ein Ausführungsbeispiel der zur Durchführung des neuen Verfahrens dienenden Einrichtung wird nachstehend anhand der beiliegenden Zeichnung beschrieben.
Fig. 1 ist eine vereinfachte Frontansicht einer Ausführungsform der erfindungsgemässen Plattensäge,
Fig. 2 zeigt die gleiche Plattensäge, ebenfalls in Frontansicht, in einer weiteren Phase des Plattenzuschnitts und
Fig. 3 ist eine Perspektivansicht eines Konstruktionsdetails.

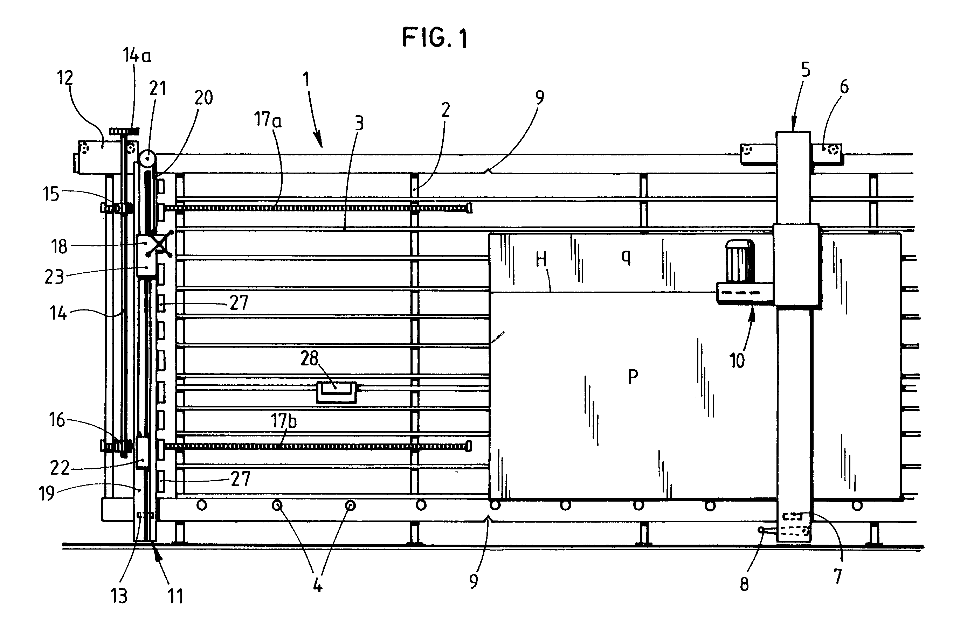

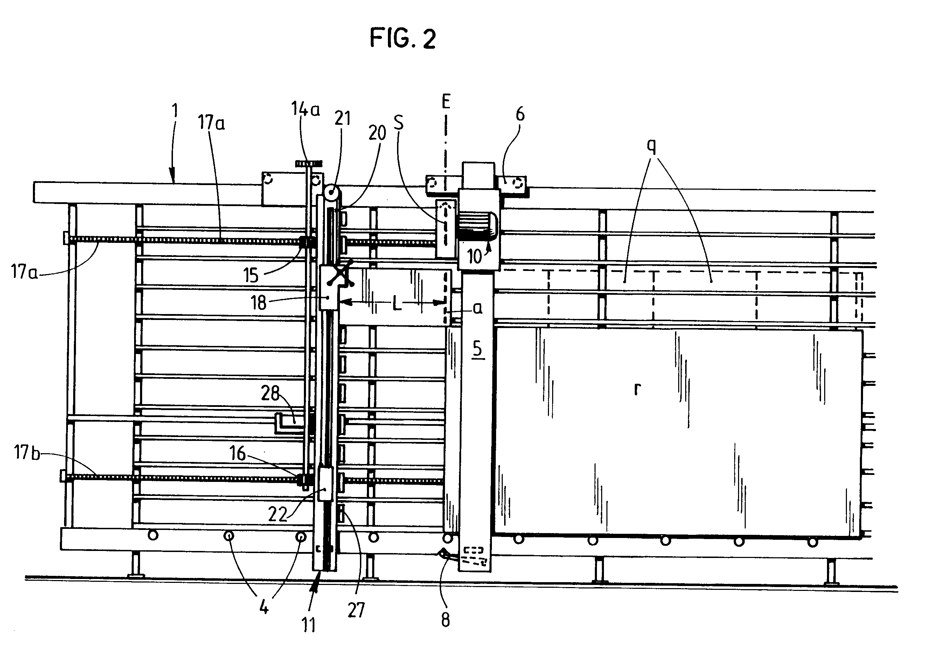

Gemäss der vereinfachten Darstellung von Fig. 1 und 2 weist die Plattensäge ein Gestell 1 auf, das sich im wesentlichen aus vertikalen Trägern 2 und horizontalen Stützleisten 3 zusammensetzt. Die Träger 2 und Stützleisten 3 bilden in bekannter Weise den zur Aufnahme der plattenförmigen Werkstücke P dienenden Stützrost, an dessen unterem Rand angetriebene oder lose drehbare Stützrollen 4 befestigt sind, auf denen sich die Platte P waagrecht verschieben lässt.

Ein Sägebalken 5 ist über obere und untere Führungen 6 bzw. 7 längs des Stützrostes verschiebbar und lässt sich mittels Rastorganen 8 an entsprechend vorgesehenen Kerben des Stützrostes für die Durchführung von Vertikalschnitten arretieren. Ein am Sägebalken 5 vertikal verschiebbares Sägeaggregat 10 ist in bekannter Weise zur abwechselnden Anbringung von Horizontal- und Vertikalschnitten um 90° schwenkbar gelagert.

An der Frontseite des Gestells 1 ist ein Positionierbalken 11 ebenfalls so angeordnet, dass er sich parallel zum Sägebalken 5 verschieben lässt, wobei die Führungen hier mit 12 und 13 bezeichnet sind. Der Antrieb des Positionierbalkens 11 erfolgt über eine vertikale Welle 14 mit Antriebsritzel 14a, die mit einem nicht dargestellten Elektromotor gekoppelt und mit zwei Abtriebsritzeln 15 und 16 versehen ist. Letztere kämmen mit zwei ortsfest am Gestell 1 angebrachten Zahnstangen 17a und 17b. Der Positionierbalken wird dergestalt ausgeführt, dass er automatisch das entsprechende, manuell eingegebene Mass anfährt und exakt positioniert.

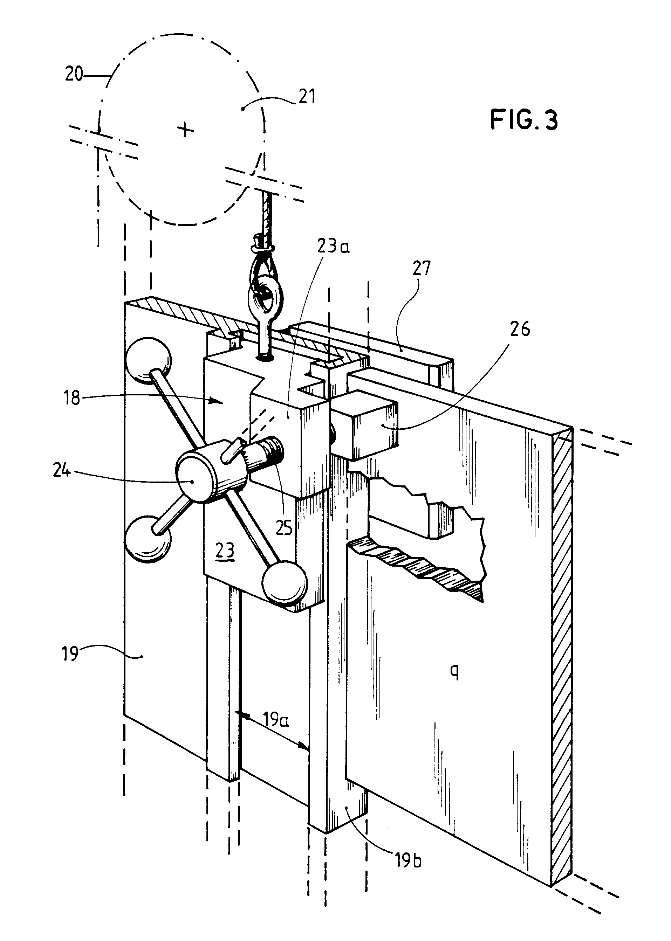

Am Positionierbalken 11 ist ein Klemmorgan 18 angeordnet, das sich längs einer vertikalen Schiene 19 verschieben und damit stufenlos jeder beliebigen Höhe anpassen lässt. Das Klemmorgan 18, dessen konstruktiver Aufbau noch anhand von Fig. 3 beschrieben wird, ist an einem Seil 20 aufgehängt, das über eine lose Rolle 21 geführt und an seinem anderen Ende mit einem Ausgleichsgewicht 22 versehen ist.

Gemäss Fig. 3 weist das Klemmorgan 18 einen in einer Führungsnut 19a gleitend geführten Schlitten 23 auf, in dessen Abkröpfung 23a ein mittels Handrad 24 und Spindel 25 betätigbares Klemmstück 26 gelagert ist. Durch Betätigung des Handrades 24 presst das Klemmstück 26 den durch Vertikalschnitte weiter aufzuteilenden Plattenstreifen q gegen eine der fest am Positionierbalken 11 zwischen den Stützleisten 2 des Gestells angeordneten Gegendruckplatten 27. Der Plattenstreifen q ist sicher am Gestell 1 gehalten, da dessen linke Unterkante gegen eine vertikale Leiste 19b anliegt (siehe Pfeil in Fig. 3).

Anhand der beschriebenen konstruktiven Ausbildung der Plattensäge lässt sich der Plattenschnitt folgendermassen durchführen:

An der durch Horizontal- und Vertikalschnitte aufzuteilenden Platte P (Fig. 1) wird zunächst durch einen Horizontalschnitt H ein oberer Plattenstreifen q abgetrennt. Dieser Streifen q wird nun mit dem Klemmorgan 18 erfasst und soweit auf dem unteren Plattenrest r (Fig. 2) nach links gezogen, bis die abzutrennende Teillänge L erreicht ist; das Längenmass L ergibt sich als Abstand zwischen der Arbeitsebene E des Sägeblattes S (Fig. 2) und der Leiste 19b (Fig. 3), wobei die exakte Lage des Positionierbalkens 11 durch einen am Gestell 1 angeordneten, ausklappbaren Anschlag 28 bestimmt ist und/oder die automatische Positionierung über ein digitales Längenmesssystem möglich ist.

Sobald der Plattenstreifen q somit die zum Abtrennen der Länge L erforderliche Lage erreicht hat, wird der entsprechende Vertikalschnitt ausgeführt, worauf sich das abgetrennte Teil von der Länge L nach dem Lösen des Klemmorgans 18 von Hand abnehmen lässt. Nun lässt sich der freie Rand des Plattenstreifens q nach einer entsprechenden Verschiebung des Positionierbalkens 11 mittels des Klemmorgans 18 erfassen und wiederum Abtrennen, nachdem der Positionierbalken 11 gegen den Anschlag 28 zurückgefahren wurde. Dieses Spiel wiederholt sich so lange, bis der letzte Rest des Platenstreifens q am Klemmorgan 18 hängt. Wie Fig. 2 zeigt, ist die einwandfreie Durchführung der Vertikalschnitte jeweils auch dadurch gewährleistet, dass der Streifen q sich beim Schneidvorgang stets auf den darunter befindlichen Plattenrest r abstützt. Selbst der letzte Streifenabschnitt wird, falls er überhaupt eines Vertikalschnittes bedarf, noch einen mehr oder weniger schmalen abzutrennenden Rand a (Fig. 2) aufweisen, dessen Unterkante am Plattenrest r aufliegt.

Sobald der obere Plattenstreifen q vorschriftsgemäss unterteilt ist, kann an dem Plattenrest r ein weiterer Horizontalschnitt vorgenommen und der neue Streifen wiederum, wie beschrieben, durch Vertikalschnitte unterteilt werden.

Das beschriebene Verfahren zeichnet sich im Gegensatz zu den bekannten Trennmethoden dadurch aus, dass die zu dessen Durchführung erforderliche Einrichtung mit geringem Aufwand erstellbar und auch an bestehenden Plattensägen anbringbar ist, dass ferner das Gestell 1 durch die erforderlichen konstruktiven Aenderungen nicht geschwächt und die Anbringung der für das arbeitende Personal wichtigen Staubabsaugung nicht behindert wird.

## Patentansprüche

1. Vertikale Plattensäge zur Anbringung von Horizontal- und Vertikalschnitten an Platten aus Holz und/oder Kunststoff und/oder Nichteisen-Metallen, mit einem annähernd vertikal stehenden Gestell (1), an dessen unterem Rand eine Reihe von Stützorganen (4) zur Aufnahme und seitlichem Verschieben der Platte (P) anordnet sind, ferner mit einem sich über die gesamte Gestellhöhe erstreckenden, längs des Gestells (1) verschiebbaren Sägebalken (5), an welchem das um 90° schwenkbare Sägeaggregat (10) vertikal verschiebbar gelagert ist, gekennzeichnet durch einen parallel zum Sägebalken (5) längs des Gestells (1) geführten Positionierbalken (11), an welchem mindestens ein zum Erfassen einer vertikalen Plattenkante geeinetes Klemmorgan (18) vertikal verschiebbar gelagert ist, eine Antriebsvorrichtung (14, 15, 16, 17a, 17b) zur Horizontalverschiebung des Positionierbalkens (11) sowie einen am Gestell verschiebbar angeordneten Anschlag (28) zur seitlichen Begrenzung der Positionierbalkenbewegung und/oder der Platte (P), wobei der Positionierbalken auch automatisch ohne Benützung des Anschlages (28) direkt auf das entsprechende Abstandsmass gefahren werden kann.

2. Plattensäge nach Anspruch 1, dadurch gekennzeichnet, dass die am Positionierbalken (11) in einer Führungsnut (19a) geführte Klemmorgan (18) über ein Seil (20) und eine am Gestelloberteil angeordnete Umlenkrolle (21) mit einem Ausgleichsgewicht verbunden ist.

3. Plattensäge nach einem der Ansprüche 1 oder 2, dadurch gekennzeichnet, dass die Antriebsvorrichtung des Positionierbalkens (11) eine am Positionierbalken befestigte Antriebswelle (14) aufweist, welche zwei Ritzel (15, 16) trägt, die mit am Gestell (1) ortsfest angeordneten Zahnstangen (17a, 17b) kämmem.

4. Verfahren zum Aufteilen einer Platte auf einer Plattensäge mit einem nahezuvertikalem Gestell und mit einem Längs des Gestells verschiebbaren Sägebalken, an dem ein um 90° schwenkbares Sägeaggregat vertikal verschiebbar ist, dadurch gekennzeichnet, dass zunächst durch einen Horizontalschnitt von der aufzuteilenden Platte ein oberer Längsstreifen abgetrennt, dieser Längsstreifen an einer vertikalen Seitenkante festgehalten, in Horizontalrichtung verschoben und anschliessend durch Vertikalschnitt unterteilt wid, solange er sich nochteilweise auf den unteren Plattenrest abstützt.

5. Verfahren nach Anspruch 4, dadurch gekennzeichnet, dass unter Verwendung der Plattensäge nach Anspruch 1
- die aufzuteilende Platte zunächst auf die Stützorgane geschoben wird,
- ein oberer Plattenstreifen unter Berücksichtigung des vorgeschriebenen Höhenmasses durch einen Horizontalschnitt abgetrennt wird,
- die dem Klemmorgan zugewandte Kante des abgetrennten Längsstreifens mittels des Klemmorgans erfasst und letzteres soweit waagrecht gegen einen nach Vorschrift eingestellten Anschlag gezogen wird, dass der nun anzubringende Vertikalschnitt ausserhalb des unteren Plattenteils liegt,
- der so abgetrennte, dem gewünschten Endmass entsprechende Streifenabschnitt nach dem Lösen der Klemmorgan-Anpresskraft abgenommen, das Klemmorgan gegen den verbliebenen Streifenrest vorgeschoben und letzterer wiederum vorgezogen wird,
- worauf sich der Vorgang wiederholt, bis der genannte Längsstreifen aufgeteilt ist und am unteren Plattenrest ein weiterer Längsstreifen durch Horizontalabschnitt abgetrennt werden kann.

## Claims

1. Vertical panel saw for applying horizontal and vertical cuts to panels of wood and/or plastics and/or non-ferrous metals, having an approximately vertically standing frame (1) on the lower edge of which are provided a row of support members (4) for receiving and for sideways movement of the panel (P), and further having a saw beam (5) which extends over the full height of the frame and is displaceable along said frame (1) and on which the sawing assembly (10), which is pivotable through 90°, is mounted so as to be vertically movable, characterised by a positioning beam (11) guided along the frame (1) parallel to the saw beam (5), on which at least one clamping member (18) adapted to grip a vertical panel edge is mounted so as to be vertically movable, a drive mechanism (14,15,16,17a,17b) for horizontally moving the positioning beam (11) and a stop (28) movably mounted on the frame for laterally delimiting the movement of the positioning beam and/or the panel (P), wherein the positioning beam can also be moved directly up to the required spacing automatically without using the stop (28).

2. Panel saw according to claim 1, characterised in that the clamping member (18) guided in a guide groove (19a) on the positioning beam (11) is connected to a balance weight via a cable (20) and a guide roller (21) mounted on the top of the frame.

3. Panel saw according to claim 1 or 2, characterised in that the drive mechanism of the positioning beam (11) comprises a drive shaft (14) secured to the positioning beam and carrying two pinions (15,16) which mesh with racks (17a,17b) fixedly mounted on the frame (1).

4. Method of sawing up a panel on a panel saw having a substantially vertical frame and a saw beam which is movable along the frame and on which a sawing assembly, which is pivotable through 90°, is vertically movable, characterised in that first an upper lengthwise strip is removed from the panel by a horizontal cut, this lengthwise strip is held firm at a vertical side edge, moved in the horizontal direction and then subdivided by a vertical cut as long as it is still partly supported by the remaining lower part of the panel.

5. Method according to claim 4, characterised in that, using the panel saw according to claim 1,
- the panel to be sawn up is first pushed on to the support members,
- an upper strip of the panel is cut off by a horizontal cut, taking into account the prescribed vertical measurement,
- the edge of the lengthwise cut-off strip nearest the clamping member is gripped by said clamping member and the latter is pulled horizontally towards a pre-set stop until the vertical cut to be made falls outside the lower part of the panel,
- the strip section thus cut off, corresponding to the desired final dimensions, is removed once the pressing force of the clamping member has been released, then the clamping member is advanced towards the remaining section of strip and this is again pulled forwards,
- after which the process is repeated until the lengthwise strip referred to above has been divided up and another lengthwise strip can be sawn off the remaining lower part of the panel by a horizontal cut.

## Revendications

1. Scie verticale de panneaux pour effectuer des coupes horizontales et verticales dans des panneaux de bois et/ou en matière plastique et/ou en métaux non ferreux, comprenant un bâti (1) disposé à peu près verticalement et sur le bord inférieur duquel sont montés une série d'organes d'appui (4) servant à recevoir et déplacer latéralement le panneau (P), en outre une poutre de sciage (5), s'étendant sur toute la hauteur du bâti (1), déplaçable en translation le long de ce bâti, et sur laquelle est dispose, avec possibilité de translation verticale, le groupe de sciage (10), pouvant pivoter de 90°, caractérisée en ce qu'il est prévu une poutre de positionnement (11), guidée parallèlement à la poutre de sciage (5) le long du bâti (1) et sur laquelle est monté, avec possibilité de translation verticale au moins, un organe de serrage (18) approprié pour maintenir un bord vertical de panneau, un dispositif d'entraînement (14, 15, 16, 17a, 17b) pour déplacer horizontalement la poutre de positionnement (11) ainsi qu'une butée (28) montée avec possibilité de translation sur le bâti pour limiter latéralement le mouvement de la poutre de positionnement et/ou du panneau (P), la poutre de positionnement pouvant également être amenée automatiquement, sans utilisation de la butée (28), directement à la cote de distance correspondante.

2. Scie à panneaux selon la revendication 1, caractérisée en ce que l'organe de serrage (18), guidé sur la poutre de positionnement (11) dans une rainure de guidage (19a), est relié à un poids d'équilibrage par l'intermédiaire d'un câble (20) et d'une poulie de renvoi (21) disposée à la partie supérieure du bâti.

3. Scie à panneaux selon une des revendications 1 et 2, caractérisée en ce que le dispositif d'entraînement de la poutre de positionnement (11) comporte un arbre d'entraînement (14) fixé sur la poutre de positionnement et supportant deux pignons (15,16) qui sont en prise avec des crémaillères (17a,17b) disposées en positions fixes sur le bâti (1).

4. Procédé pour découper un panneau sur une scie à panneaux, comportant un bâti approximativement vertical et une poutre de sciage, déplaçable le long du bâti et sur laquelle est déplaçable en translation verticale un groupe de sciage, pouvant pivoter de 90°, caractérisé en ce qu'initialement, au moyen d'une coupe horizontale, une bande longitudinale supérieure est séparée du panneau à découper, cette bande longitudinale est maintenue par un bord latéral vertical, est déplacée dans une direction horizontale et est ensuite divisée par une coupe verticale tant qu'elle s'appuie encore partiellement sur le reste inférieur du panneau.

5. Procédé selon la revendication 4, caractérisé en ce que, en utilisant la scie selon la revendication 1,
- le panneau à découper est initialement engagé sur les organes d'appui,
- une bande supérieure du panneau est séparée par une coupe horizontale, en tenant compte de la dimension de hauteur prescrite,
- le bord, dirigé vers l'organe de serrage, de la bande longitudinale séparée est maintenu au moyen de l'organe de serrage et ce dernier est déplacé horizontalement jusque contre une butée réglée conformément aux prescriptions de telle sorte que la coupe verticale à effectuer maintenant soit située à l'extérieur de la partie inférieure du panneau,
- la partie de bande ainsi séparée et correspondant à la cote finale désirée est enlevée après suppression de la force de maintien exercée par l'organe de serrage, l'organe de serrage est amené contre la partie restante de la bande et cette dernière est à nouveau avancée,
- ensuite le processus est répété jusqu'à ce que la bande longitudinale précitée soit divisée et que, dans la partie restante inférieure du panneau, une autre bande longitudinale puisse être séparée par une coupe horizontale.
